# EUROPÄISCHE PATENTSCHRIFT

(11) **EP 0 569 681 B1**
(45) Veröffentlichungstag und Bekanntmachung des Hinweises auf die Patenterteilung: **28.08.1996**
(21) Anmeldenummer: 93103985.3
(22) Anmeldetag: 11.03.1993
(51) Int. Cl.: B32B 7/10, C09J 175/06, B32B 27/34, B32B 27/36

(54) **Mehrschichtiges Kunststoffrohr**
Multilayered plastic pipe
Tuyau plastique à plusieurs couches

(30) Priorität: 12.05.1992 DE 4215608
(43) Veröffentlichungstag der Anmeldung: 18.11.1993
(73) Patentinhaber: HÜLS AKTIENGESELLSCHAFT, D-45764 Marl (DE)
(72) Erfinder: Röber, Stefan, Dr., W-4370 Marl 1 (DE); Mügge, Joachim,Dr., W-4358 Haltern (DE); Feinauer, Roland, Dr., W-4370 Marl (DE); Jadamus, Hans, Dr., W-4370 Marl (DE); Herrmann, Hans-Dieter, W-4370 Marl (DE); Ries, Hans, Dr., W-4370 Marl (DE)

(56) Entgegenhaltungen:
- EP-A- 0 071 142
- EP-A- 0 225 049
- EP-A- 0 384 404
- DE-A- 2 822 394
- DE-A- 3 234 590
- DE-A- 3 827 092
- GB-A- 1 547 480
- NL-A- 7 512 917

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fliegende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In DE-PS 38 27 092 wird ein mehrschichtiges Kunststoffrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist dem Fachmann bekannt, daß die weitaus meisten Polymere, so auch Polyamide und Polyester, miteinander unverträglich sind, weshalb bei der Herstellung von Mehrschichtverbunden keine Anhaftung zwischen den Laminatschichten erreicht wird. Ein kraftschlüssiger Verbund zwischen den einzelnen Polymerschichten ist bei technischen Anwendungen unbedingt erforderlich.

Vor allem die Permeation von methanolhaltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Aufgabe der Erfindung war es, ein Polyamidrohr mit einer guten Sperrwirkung gegen das transportierte Medium vor allem gegenüber Methanolhaltigen Kraftstoffen, einer zufriedenstellenden Maßhaltigkeit sowie einer befriedigenden mechanischen Belastbarkeit zu entwickeln.

Diese Aufgabe wird gelöst durch ein mehrschichtiges Kunststoffrohr, indem es
I. mindestens aus einer Außenschicht auf Basis einer Formmasse aus Polyamid
   und
II. mindestens aus einer Schicht einer Formmasse auf Basis eines Gemisches aus
   a. 99 bis 60 Gew.-% eines linearen, kristallinen Polyesters
      und
   b. 1 bis 40 Gew.-% einer mindestens zwei Isocyanatgruppen aufweisenden Verbindung
   besteht, wobei die der Komponente II. b. entstammenden Isocyanatgruppen in der Komponente II. in einer Konzentration zwischen 0,03 und 3 Gew.-% enthalten sind,
und die Schichten kraftschlüssig miteinander verbunden sind.

Die Schicht gemäß II. setzt sich zusammen aus 99 bis 60, vorzugsweise 98 bis 70, und insbesondere aus 97,5 bis 90 Gew.-% an Komponente II. a. und 1 bis 40, vorzugsweise 2 bis 30, und insbesondere 2,5 bis 10 Gew.-% an Komponente II. b. Die der Komponente II. b. entstammenden Isocyanatgruppen sind in der Komponente II. in einer Konzentration zwischen 0,03 und 3 Gew.-%, vorzugsweise zwischen 0,3 und 1,8 Gew.-% vorhanden.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleitetem Lactam ausgegangen worden ist - H. Domininghaus, **Die Kunststoffe und ihre Eigenschaften,** Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes,** S. 424-67; Interscience Publishers, New York (1977); DE-AS 21 52 194).

Ebenfalls geeignet als Polyamide sind gemischte aliphatisch/aromatische Polykondensate, wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology,** 3. Aufl., Vol. 18, Seiten 328 und 435 - Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηᵣₑₗ) im Bereich von 1,5 bis 2,8.

In einer bevorzugten Ausführungsform werden solche Polyamide für die Komponente I. verwendet, bei denen mindestens 50 % aller Endgruppen Aminogruppen darstellen.

Die genannten Polyamide werden für sich oder in Gemischen eingesetzt.

Die linearen, kristallinen Polyester (Komponente II. a.) weisen nachstehende Grundstruktur auf 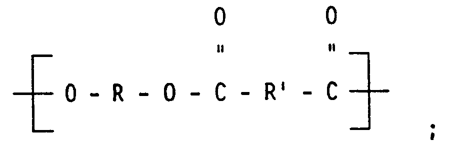
dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 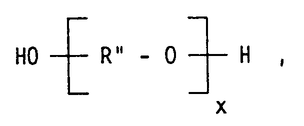
wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie,** 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 cm³/g auf.

Die Polyamide der Außenschicht gemäß I. und/oder die linearen, kristallinen Polyester (Komponente II.a.) können bis zu 40 Gew.-% andere Thermoplaste enthalten, sofern diese die Verbundfähigkeit nicht stören. Insbesondere seien hier Polycarbonat [H. Schnell, **Chemistry and Physics of Polycarbonates,** Interscience Publishers, New York (1981)], Acrylnitril/Styrol/ Butadien- (Houben-Weyl, **Methoden der organischen Chemie,** Bd. 14/1, Georg Thieme Verlag Stuttgart, S. 393 - 406; **Ullmanns Encyclopädie der technischen Chemie,** 4. Auflage, Bd. 19, Verlag Chemie Weinheim (1981), S. 279 - 284), Acrylnitril/Styrol/Acrylat- **(Ullmanns Encyclopädie der technischen Chemie,** 4. Auflage, Bd. 19, Verlag Chemie Weinheim (1981), S. 277 - 295), Acrylnitril/Styrol-Copolymerisat **(Ullmanns Encyclopädie der technischen Chemie, 4.** Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Polymere sind z. B. Ethylen/Propylen-oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Als Komponente II.b. werden Verbindungen eingesetzt, die mindestens zwei Isocyanatgruppen tragen. Als solche eignen sich di- und höherfunktionelle Isocyanate, insbesondere aromatische und (cyclo-)aliphatische Isocyanate wie beispielsweise 1,4-Phenylendiisocyanat, 2,4- Toluylendiisocyanat, 2,6-Toluylendiisocyanat, 1,5-Naphthylendiisocyanat, 1,6-Hexamethylendiisocyanat, Diphenylmethan-2,4-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat und Triphenylmethan-4,4',4''-triisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat, Hexahydro-1,4-phenylendiisocyanat, Norbonandiisocyanat, p- oder m-Xylylendiisocyanate, Perhydro-2,4-diphenylmethandiisocyanat und Perhydro-4,4'-diphenylmethandiisocyanat.

Geeignet sind auch Isocyanate, die Isocyanurat-, Urethan-, acylierte Harnstoff-, Biuret-, Carbodiimid- oder Estergruppen aufweisen. Ferner können oligomere Fettsäure enthaltende Isocyanate oder perchlorierte Arylisocyanate verwendet werden.

Die Isocyanate können auch als blockierte Isocyanate eingesetzt werden. Als Beispiel seien Umsetzungsprodukte der oben genannten Isocyanate mit Diolen, Lactamen oder Oximen angeführt.

Bevorzugt werden 2,4- und 2,6-Toluylendiisocyanate sowie Isocyanate, die Isocyanurat-, Urethan-, Harnstoff- oder Biuretgruppen aufweisen. Weiterhin bevorzugt werden Isophorondiisocyanate sowie davon abgeleitete Isocyanurate sowie daraus hergestellte Mischungen.

Die Formmassen für die Schichten gemäß I. sowie II. können übliche Hilfs- und Zusatzstoffe wie z. B. Flammschutzmittel, Stabilisatoren, Verarbeitungshilfsmittel, Viskositätsverbesserer, Füllstoffe, insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 200 und 300 °C.

Bei der Herstellung der Formmasse für die Schicht gemäß II. können die bei der Verarbeitung von Isocyanaten üblichen und bekannten Katalysatoren eingesetzt werden.

Die Formmasse für die Schicht gemäß II. sollte vor der Herstellung der mehrschichtigen Rohre trocken und unter Ausschuß von Luftfeuchtigkeit gelagert werden.

Die oben beschriebene Herstellung der Formmasse für die Schicht gemäß II. kann auch direkt in einem Speiseextruder der zur Herstellung der mehrschichtigen Rohre verwendeten Coextrusionsanlage oder Spritzgußanlage erfolgen, so daß die Formmasse für die Schicht gemäß II. direkt im Anschluß an ihre Herstellung - ohne weitere Zwischenlagerung - zu einer Schicht des mehrschichtigen Rohres verarbeitet werden kann.

Die Fertigung der mehrschichtigen Rohre erfolgt in bekannter, wie z. B. weiter oben im Stand der Technik beschriebener Weise.

Die erfindungsgemäßen mehrschichtigen Rohre weisen in hervorragendem Maße eine gute Beständigkeit sowie gute Sperrwirkung gegen Diffusion gegenüber chemischen Agenzien, Lösemitteln und Kraftstoffen auf. Ferner sind die beiden Schichten kraftschlüssig miteinander verbunden, so daß z. B. bei thermischer Ausdehnung oder Biegen eines Rohres kein Abscheren der verschiedenen Schichten voneinander auftritt. Darüber hinaus ist es auch möglich, neben einem 2-Schichtrohr andere Rohrtypen herzustellen, die z. B. aus 3 oder mehr Schichten bestehen, indem weitere Schichten gemäß I. bzw. II. zusätzlich eingearbeitet werden.

Bevorzugt eingesetzt werden die erfindungsgemäßen Kunststoffrohre zum Stofftransport chemischer Agentien bzw. im Kraftstoffsektor zum Durchleiten von Brems-, Kühl- und Hydraulikflüssigkeiten sowie Kraftstoff.

Die in den Beispielen aufgeführten Ergebnisse wurden mit Hilfe nachstehender Meßverfahren bestimmt.

Die **Bestimmung der Lösungsviskosität** (rel. Viskosität η ᵣₑₗ) der **Polyamide** erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in dem Polyamid wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728/ ISO 1628/5 - Teil 5.

Für die **Bestimmung der Isocyanatgruppen** werden 6 g der Komponente II. (Polyester, Isocyanat) bei 180 °C in einem Gemisch aus Dichlorbenzol/Dibutylamin (80 : 20 Vol.-%) gelöst. Die Lösung wird bei 20 °C mit 10 %-iger Salzsäure gegen Bromphenol als Indikator titriert (DIN 53 185).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.-

### Beispiele

### PA. Komponente I.

- **PA 1:**: Polyamid 12 ( rel: 2,08; 30 % der Endgruppen Aminogruppen; 16 mmol/kg Aminoendgruppen; 36 mmol/kg Carboxyl-Endgruppen)
- **PA 2:**: Polyamid 12 ( rel: 2,10; 30 % der Endgruppen Aminogruppen; 15 mmol/kg Aminoendgruppen; 34 mmol/kg Carboxyl-Endgruppen; modifiziert mit 15 Gew.-% handelsüblichem Weichmacher)
- **PA 3:**: Polyamid 6.12 ( rel: 1,9; 88 % der Endgruppen Aminogruppen; 93 mmol/kg Aminoendgruppen; 29 mmol/kg Carboxyl-Endgruppen)
- **PA 4:**: Polyamid 6 ( rel: 2,01; 51,6 % der Endgruppen Aminogruppen; 33 mmol/kg Aminoendgruppen; 31 mmol/kg Carboxyl-Endgruppen)
- **PA 5:**: Polyamid 12 ( rel: 1,9; 86 % der Endgruppen Aminoendgruppen; 60 mmol/kg Aminoendgruppen; 10 mmol/kg Carboxyl-Endgruppen)
- **PA 6:**: Polyamid 12 ( ᵣₑₗ: 2,0; 86,2 % der Endgruppen Aminogruppen; 50 mmol/kg Aminoendgruppen; 8 mmol/kg Carboxyl-Endgruppen; modifiziert mit 15 Gew.-% handelsüblichem Weichmacher)

### B. Komponente II.

- **Z 1:**: Homopolybutylenterephthalat (J-Wert: 165 cm³/g; VESTODUR^{R} 3000 - HÜLS AG; NCO-Gehalt = 0)
- **Z 2:**: Homopolybutylenterephthalat (J-Wert: 145 cm³/g; VESTODUR^{R} 2000 - HÜLS AG; NCO-Gehalt = 0)
- **Z 3:**: Homopolyethylenterephthalat (POLYCLEAR^{R} TR 86 - HOECHST AG; NCO-Gehalt = 0)
- **Z 4:**: Ethylen/Vinylalkohol-Copolymerisat (EVAL^{R} EP-E105A-KURARA; NCO-Gehalt = 0)
- **Z 5:**: Homopolybutylenterephthalat (J-Wert: 115 cm³/g; VESTODUR^{R} 1000 - HÜLS AG; NCO-Gehalt = 0)
- **Z 6**: **:** Mischung aus
a. 90 Gew.-% Homopolybutylenterephthalat (J-Wert 115 cm³/g; VESTODUR^{R} 1000 - HÜLS AG)
   und
b. 10 Gew.-% Isocyanurat des Isophorondiisocyanat (trimeres Isocyanat mit 12 Gew.-% NCO-Endgruppen bezogen auf Komponente II. b.)
   NCO-Gruppen-Konzentration in der Komponente II.: 0,6 Gew.-%.
- **Z 7:**: Mischung aus
a. 95 Gew.-% Homopolybutylenterephthalat (J-Wert 115 cm³/g; VESTODUR^{R} 1000 - HÜLS AG)
   und
b. 5 Gew.-% Isocyanurat des Isophorondiisocyanat (trimeres Isocyanat mit 12 Gew.-% NCO-Endgruppen bezogen auf Komponente II. b.)
   NCO-Gruppen-Konzentration in der Komponente II.: 0,3 Gew.-%.
- **Z 8:**: Mischung aus
a. 95 Gew.-% Homopolybutylenterephthalat (J-Wert 145 cm³/g; VESTODUR^{R} 2000 - HÜLS AG)
   und
b. 5 Gew.-% einer Mischung bestehend aus
   41,4 Gew.-% Caprolactam
   33,7 Gew.-% Isocyanurat des Isophorondiisocyanats
   24,9 Gew.-% Isophorondiisocyanat
mit 14,8 - 15,8 Gew.-% NCO-Endgruppen bezogen auf Komponente II.b.
NCO-Gruppen-Konzentration in der Komponente II.: 0,35 Gew.-%.
- **Z 9:**: Mischung aus
a. 97,5 Gew.-% Homopolybutylenterephthalat (J-Wert 115 cm³/g; VESTODUR^{R} 1000 - HÜLS AG)
   und
b. 2,5 Gew.-% einer Mischung bestehend aus
   41,4 Gew.-% Caprolactam
   33,7 Gew.-% Isocyanurat des Isophorondiisocyanats
   24,9 Gew.-% Isophorondiisocyanat
mit 14,8 - 15,8 Gew.-% NCO-Endgruppen bezogen auf Komponente II.b.
NCO-Gruppen-Konzentration in der Komponente II.: 0,17 Gew.-%.

### C. Herstellung der mehrschichtigen Rohre

Die Rohre werden auf einer Laborrohrextrusionsanlage mit einem Fünfschichtrohrwerkzeug (bei der Herstellung der Dreischichtrohre bleiben 2 Kanäle geschlossen) hergestellt. Die Speiseextruder weisen alle einen Schneckendurchmesser von 25 mm auf. Die Zylindertemperaturen lagen bei 220 °C (PA 2; PA 5; PA 6; Z 4); 230 °C (PA 1); 240 °C (PA 3);
250 °C (Z 1; Z 2; Z 3; Z 5; Z 6; Z 7; Z 8; Z 9); 260 °C (Z 4)..
Die Schichtdicken betragen von innen nach außen: 0,2 mm; 0,2 mm; 0,6 mm.

**Tabelle**

| Versuch | Innenschicht | Zwischenschicht(en) | Außenschicht | Diffusion [g·d⁻¹·m⁻²] | An der Grenzfläche mechanisch trennbar - nach Lagerung bei 23 °C/in Kraftstoff^{*)} | |
|---|---|---|---|---|---|---|
| A | PA 1 | Z 1 | PA 1 | 1,2 | ja | ja |
| B | PA 2 | Z 2 | PA 2 | 1,4 | ja | ja |
| C | PA 3 | Z 3 | PA 3 | **) | ja | ja |
| D | PA 2 | PA 2 | PA 2 | 100 | nein | nein |
| E | PA 1 | PA 1 | PA 1 | 30 | nein | nein |
| F | PA 4 | Z 4 | PA 2 | 11 | nein | nein |
| G | PA 5 | Z 5 | PA 5 | 1,3 | ja | ja |
| 1 | PA 1 | Z 6 | PA 1 | 1,3 | nein | nein |
| 2 | PA 2 | Z 6 | PA 2 | 1,5 | nein | nein |
| 3 | PA 5 | Z 6 | PA 5 | 1,3 | nein | nein |
| 4 | PA 6 | Z 7 | PA 6 | 1,3 | nein | nein |
| 5 | PA 5 | Z 7 | PA 5 | 1,3 | nein | nein |
| 6 | PA 1 | Z 8 | PA 1 | 1,4 | nein | nein |
| 7 | PA 6 | Z 8 | PA 5 | 1,5 | nein | nein |
| 8 | PA 6 | Z 9 | PA 5 | 1,2 | nein | nein |
| 9 | PA 3 | Z 9 | PA 4 | 1,2 | nein | nein |

| | | | | | | |
|---|---|---|---|---|---|---|
| *) Lagerung bei 23 °C während 5 Tagen in Normalkraftstoff M 15 (42,5 Vol.-Tle Isooctan, 42,5 Vol.-Tle. Toluol und 15 Vol.-Tle. Methanol | | | | | | |
| **) nicht bestimmt | | | | | | |

## Patentansprüche

1. Mehrschichtiges Kunststoffrohr,
dadurch gekennzeichnet,
I. daß es mindestens aus einer Außenschicht auf Basis aus Polyamid
und
II. mindestens aus einer Schicht aus einer Formmasse auf Basis eines Gemisches aus
a. 99 bis 60 Gew.-% eines teilkristallinen thermoplastischen Polyesters
und
b. 1 bis 40 Gew.-% einer mindestens zwei Isocyanatgruppen aufweisenden Verbindung
besteht, wobei die der Komponente II. b. entstammenden Isocyanatgruppen in der Komponente II. in einer Konzentration zwischen 0,03 und 3 Gew.-% enthalten sind,
und die Schichten kraftschlüssig miteinander verbunden sind.

2. Mehrschichtiges Kunststoffrohr nach Anspruch 1,
dadurch gekennzeichnet,
daß bei dem Polyamid der Komponente I. mindestens 50 % aller vorhandenen Endgruppen Aminogruppen sind.

3. Mehrschichtiges Kunststoffrohr nach den Anspruchen 1 und 2,
dadurch gekennzeichnet, daß die Schicht gemäß II. eine Formmasse auf Basis eines Gemisches aus
a. 98 bis 70 Gew.-% eines linearen teilkristallinen Polyesters
und
b. 2 bis 30 Gew.-% einer mindestens zwei Isocyanatgruppen aufweisenden Verbindung
darstellt.

4. Mehrschichtiges Kunststoffrohr nach den Ansprüchen 1 und 2,
dadurch gekennzeichnet,
daß die Schicht gemäß II. eine Formmasse auf Basis eines Gemisches aus
a. 97,5 bis 90 Gew.-% eines linearen teilkristallinen Polyesters
und
b. 2,5 bis 10 Gew.-% einer mindestens zwei Isocyanatgruppen aufweisenden Verbindung
darstellt.

5. Mehrschichtiges Kunststoffrohr nach den Ansprüchen 1 bis 4,
dadurch gekennzeichnet,
daß die der Komponente II. b. entstammenden Isocyanatgruppen in der Schicht gemäß II. in einer Konzentration zwischen 0,3 und 1,8 Gew.-% vorhanden sind.

6. Mehrschichtiges Kunststoffrohr nach den Ansprüchen 1 bis 5,
dadurch gekennzeichnet,
daß die Isocyanate der Komponente II. b. Isocyanurat-, Urethan-, acylierte Harnstoff-, Biuret-, Carbodiimid- oder Estergruppen aufweisen.

7. Mehrschichtiges Kunststoffrohr nach den Ansprüchen 1 bis 5,
dadurch gekennzeichnet,
daß die Komponente II. b. Isophorondiisocyanat und/oder ein daraus abgeleitetes Isocyanurat darstellt.

8. Mehrschichtiges Kunststoffrohr nach den Ansprüchen 1 bis 7,
dadurch gekennzeichnet,
daß die Komponente II. b. ein durch ein Lactam blockiertes Isocyanat enthält.

9. Mehrschichtiges Kunststoffrohr nach den Ansprüchen 1 bis 8,
dadurch gekennzeichnet,
daß das Kunststoffrohr aus mehreren Schichten gemäß I. bzw. II. besteht.

10. Verwendung des mehrschichtigen Kunststoffrohres nach den Ansprüchen 1 bis 9 für den Stofftransport chemischer Agentien.

11. Verwendung des mehrschichtigen Kunststoffrohres nach den Ansprüchen 8 und 9 auf dem Kraftfahrzeugsektor zum Durchleiten von Brems-, Kühl- und Hydraulikflüssigkeiten sowie Kraftstoff.

## Claims

1. A multi-layer plastic pipe, characterised in that
I. it comprises at least one outer layer based on polyamide and
II. at least one layer of a moulding compound based on a mixture of
a. 99 to 60 % by weight of a partially crystalline thermoplastic polyester and
b. 1 to 40 % by weight of a compound having at least two isocyanate groups,
the isocyanate groups originating from component II.b. being contained in component II. in a concentration of from 0.03 to 3 % by weight,
and the layers are adhesively bonded together.

2. A multi-layer plastic pipe according to claim 1, characterised in that at least 50 % of all existing end groups in the polyamide of component I. are amino groups.

3. A multi-layer plastic pipe according to either of claims 1 and 2, characterised in that the layer according to II. is a moulding compound based on a mixture of
a. 98 to 70 % by weight of a linear partially crystalline polyester and
b. 2 to 30 % by weight of a compound having at least two isocyanate groups.

4. A multi-layer plastic pipe according to either of claims 1 and 2, characterised in that the layer according to II. is a moulding compound based on a mixture of
a. 97.5 to 90 % by weight of a linear partially crystalline polyester and
b. 2.5 to 10 % by weight of a compound having at least two isocyanate groups.

5. A multi-layer plastic pipe according to any of claims 1 to 4, characterised in that the isocyanate groups originating from component II.b. are present in the layer according to II. in a concentration of from 0.3 to 1.8 % by weight.

6. A multi-layer plastic pipe according to any of claims 1 to 5, characterised in that the isocyanates of component II.b. have isocyanurate, urethane, acylated urea, biuret, carbodiimide or ester groups.

7. A multi-layer plastic pipe according to any of claims 1 to 5, characterised in that component II.b. is isophorone diisocyanate and/or an isocyanurate derived therefrom.

8. A multi-layer plastic pipe according to any of claims 1 to 7, characterised in that component II.b. contains an isocyanate blocked by a lactam.

9. A multi-layer plastic pipe according to any of claims 1 to 8, characterised in that the plastic pipe comprises a plurality of layers according to I. and II.

10. Use of the multi-layer plastic pipe according to any of claims 1 to 9 for the transport of chemical agents.

11. Use of the multi-layer plastic pipe according to either of claims 8 and 9 in the automotive sector for conveying brake, cooling and hydraulic fluids as well as fuel.

## Revendications

1. Tube plastique multicouche, caractérisé en ce qu'il est constitué
I. d'au moins une couche extérieure à base d'un polyamide, et
II. d'au moins une couche constituée d'un mélange à mouler à base d'un mélange
a. de 99 à 60 % en poids d'un polyester thermoplastique partiellement cristallin, et
b. de 1 à 40 % en poids d'un composé comportant au moins deux groupes isocyanate,
auquel cas les groupes isocyanate provenant du constituant II.b sont contenus dans le constituant II à une concentration de 0,03 à 3 % en poids,
et que les couches sont liées l'une à l'autre par une liaison dynamique.

2. Tube plastique multicouche selon la revendication 1, caractérisé en ce que, dans le polyamide du constituant I, au moins 50 % de tous les groupes terminaux présents sont des groupes amino.

3. Tube plastique multicouche selon les revendications 1 et 2, caractérisé en ce que la couche selon II est un mélange à mouler à base d'un mélange constitué
a. de 98 à 70 % en poids d'un polyester linéaire partiellement cristallin, et
b. de 2 à 30 % en poids d'un composé comportant au moins deux groupes isocyanate.

4. Tube plastique multicouche selon les revendications 1 et 2, caractérisé en ce que la couche selon II est un mélange à mouler à base d'un mélange
a. de 97,5 à 90 % en poids d'un polyester linéaire partiellement cristallin, et
b. de 2,5 à 10 % en poids d'un composé comportant au moins deux groupes isocyanate.

5. Tube plastique multicouche selon les revendications 1 à 4, caractérisé en ce que les groupes isocyanate provenant du constituant II.b sont présents dans la couche selon II à une concentration comprise entre 0,3 et 1,8 % en poids.

6. Tube plstique multicouche selon les revendications 1 à 5, caractérisé en ce que les isocyanates du constituant II.b comportent des groupes isocyanurate, uréthanne, urée acylée, biuret, carbodiimide ou ester.

7. Tube plastique multicouche selon les revendications 1 à 5, caractérisé en ce que le constituant II.b est le diisocyanate d'isophorone ou un diisocyanurate qui en dérive.

8. Tube plastique multicouche selon les revendications 1 à 7, caractérisé en ce que le constituant II.b contient un isocyanate bloqué par un lactame.

9. Tube plastique multicouche selon les revendications 1 à 9, caractérisé en ce que le tube plastique est constitué de plusieurs couches selon I ou II.

10. Utilisation du tube plastique multicouche selon les revendications 1 à 9 pour le transport d'agents chimiques.

11. Utilisation du tube plastique multicouche selon les revendications 8 et 9 dans le secteur des véhicules à moteur, pour transporter des liquides de frein, de refroidissement et des fluides hydrauliques, ainsi que du carburant.
